# EUROPEAN PATENT APPLICATION

(11) **EP 4 625 860 A2**
(43) Date of publication of application: **01.10.2025**
(21) Application number: 25166591.5
(22) Date of filing: 27.03.2025
(51) Int. Cl.: H04L 1/00, H04B 7/0413

(54) **SIGNALING DESIGNS FOR UHR TRANSMISSIONS IN WIRELESS COMMUNICATIONS**

(30) Priority: 27.03.2024 US 202463570309 P; 07.08.2024 US 202463680089 P; 24.09.2024 US 202463698082 P; 26.03.2025 US 202519090423
(71) Applicant: MediaTek Inc., Hsinchu City, 30078 (TW)
(72) Inventor: CHEN, You-Wei, San Jose, 95134 (US); LIU, Jianhan, San Jose, 95134 (US); HU, Shengquan, San Jose, 95134 (US); Pare Jr., Thomas Edward, San Jose, 95134 (US)
(74) Representative: Haseltine Lake Kempner LLP

(57) **Abstract**

Techniques pertaining to signaling designs for ultra-high-reliability (UHR) transmissions in wireless communications are described. An apparatus (e.g., a station (STA)) performs a wireless communication with a physical-layer protocol data unit (PPDU) by either: (i) generating and transmitting the PPDU or (ii) receiving and processing the PPDU. The wireless communication is performed with signaling indicating information of unequal modulation (UEQM) on one or more spatial streams with respect to a transmission of the PPDU.

## Description

### CROSS REFERENCE TO RELATED PATENT APPLICATION

The present disclosure is part of a non-provisional patent application claiming the priority benefit of U.S. Provisional Patent Application Nos. 63/570,309, 63/680,089 and 63/698,082, filed 27 March 2024, 07 August 2024 and 24 September 2024, respectively, the contents of which being herein incorporated by reference in their entirety.

### TECHNICAL FIELD

The present disclosure is generally related to wireless communications and, more particularly, to signaling designs for ultra-high-reliability (UHR) transmissions in wireless communications.

### BACKGROUND

Unless otherwise indicated herein, approaches described in this section are not prior art to the claims listed below and are not admitted as prior art by inclusion in this section.

In wireless communications such as Wi-Fi (or WiFi) in accordance with the Institute of Electrical and Electronics Engineers (IEEE) specification(s), channel condition among spatial streams (SS) may vary and can be quite different (e.g., with a delta signal-to-interference-and-noise ratio (SINR) of 10 ~ 15dB among spatial streams (SS)). Thus, the concept of unequal modulation ( UEQM ) on spatial streams has been proposed in the IEEE 802.11n specification. It is believed that UEQM on spatial streams may significantly improve system throughput. However, at the time of the present disclosure, there are a plethora of options regarding UEQM patterns, causing complexity and less inducive to implementation. Besides, extra modulation and coding schemes (MCSs), UEQM over different spatial streams and/or over frequency domain (FD), two times low-density parity-check (2xLDPC) and distributed tone resource unit (DRU) have been discussed as IEEE 802.11bn physical-layer (PHY) features. Signaling schemes need to be designed to enable new and existing features for WLAN products based on the IEEE 802.11bn (and beyond) specifications. Therefore, there is a need for a solution of signaling designs for UHR transmissions in wireless communications.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to provide schemes, concepts, designs, techniques, methods and apparatuses pertaining to signaling designs for UHR transmissions in wireless communications. It is believed that aforementioned issue(s) may be avoided or otherwise alleviated by implementation of one or more of the various proposed schemes described herein. For instance, the various proposed signaling schemes may involve different signaling fields and different combinations thereof such as for, for example, non-multi-user multiple-input-multiple-output (non-MU-MIMO) User field signaling, MU-MIMO User field signaling, trigger frames signaling (including Common User Info, Special User Info, and User Info fields), and UHR Signal field (UHR-SIG) signaling with UEQM indications.

In one aspect, a method may involve a processor of an apparatus performing a wireless communication with a physical-layer protocol data unit (PPDU) by either: (i) generating and transmitting the PPDU or (ii) receiving and processing the PPDU.

In another aspect, an apparatus may include a transceiver configured to communicate wirelessly and a processor coupled to the transceiver. The processor may perform a wireless communication with a trigger frame by either: (i) generating and transmitting the trigger frame or (ii) receiving and processing the trigger frame. The trigger frame may be used to solicit a trigger-based (TB) PPDU.

It is noteworthy that, although description provided herein may be in the context of certain radio access technologies, networks and network topologies such as, Wi-Fi, the proposed concepts, schemes and any variation(s)/derivative(s) thereof may be implemented in, for and by other types of radio access technologies, networks and network topologies such as, for example and without limitation, Bluetooth, ZigBee, 5^{th} Generation (5G)/New Radio (NR), Long-Term Evolution (LTE), LTE-Advanced, LTE-Advanced Pro, Internet-of-Things (IoT), Industrial IoT (IIoT) and narrowband IoT (NB-IoT). Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation to clearly illustrate the concept of the present disclosure.
FIG. 1 is a diagram of an example network environment in which various solutions and schemes in accordance with the present disclosure may be implemented.
FIG. 2 is a diagram of an example design under a proposed scheme in accordance with the present disclosure.
FIG. 3 is a diagram of an example design under a proposed scheme in accordance with the present disclosure.
FIG. 4 is a diagram of an example design under a proposed scheme in accordance with the present disclosure.
FIG. 5 is a diagram of an example design under a proposed scheme in accordance with the present disclosure.
FIG. 6 is a diagram of an example design under a proposed scheme in accordance with the present disclosure.
FIG. 7 is a diagram of an example design under a proposed scheme in accordance with the present disclosure.
FIG. 8 is a diagram of an example design under a proposed scheme in accordance with the present disclosure.
FIG. 9 is a diagram of an example design under a proposed scheme in accordance with the present disclosure.
FIG. 10 is a diagram of an example design under a proposed scheme in accordance with the present disclosure.
FIG. 11 is a diagram of an example design under a proposed scheme in accordance with the present disclosure.
FIG. 12 is a diagram of an example design under a proposed scheme in accordance with the present disclosure.
FIG. 13 is a diagram of an example design under a proposed scheme in accordance with the present disclosure.
FIG. 14 is a diagram of an example design under a proposed scheme in accordance with the present disclosure.
FIG. 15 is a diagram of an example design under a proposed scheme in accordance with the present disclosure.
FIG. 16 is a diagram of an example design under a proposed scheme in accordance with the present disclosure.
FIG. 17 is a diagram of an example design under a proposed scheme in accordance with the present disclosure.
FIG. 18 is a diagram of an example design under a proposed scheme in accordance with the present disclosure.
FIG. 19 is a diagram of an example design under a proposed scheme in accordance with the present disclosure.
FIG. 20 is a diagram of an example design under a proposed scheme in accordance with the present disclosure.
FIG. 21 is a block diagram of an example communication system under a proposed scheme in accordance with the present disclosure.
FIG. 22 is a flowchart of an example process under a proposed scheme in accordance with the present disclosure.
FIG. 23 is a flowchart of an example process under a proposed scheme in accordance with the present disclosure.

### DETAILED DESCRIPTION OF PREFERRED EMBODIMENTS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to signaling designs for UHR transmissions in wireless communications. According to the present disclosure, a number of possible solutions may be implemented separately or jointly. That is, although these possible solutions may be described below separately, two or more of these possible solutions may be implemented in one combination or another.

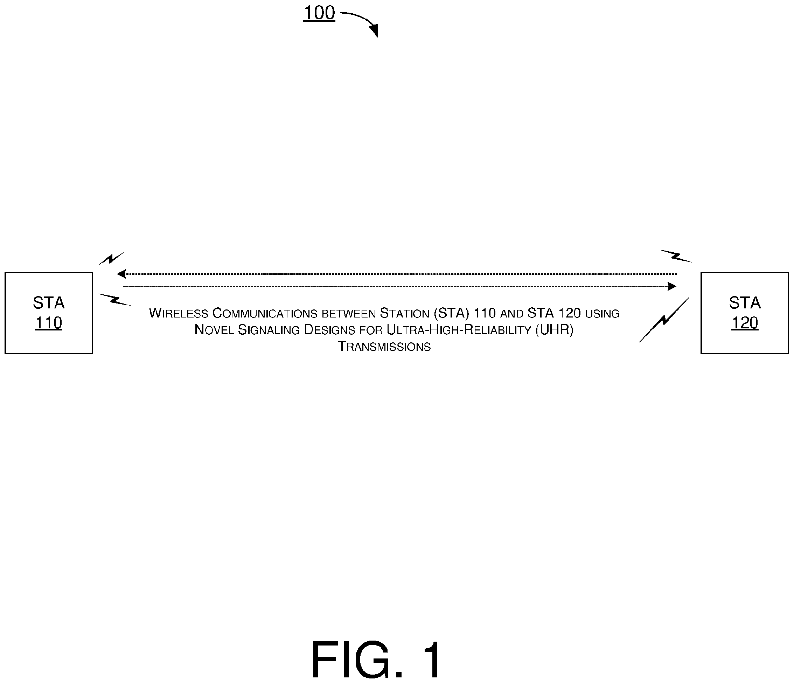

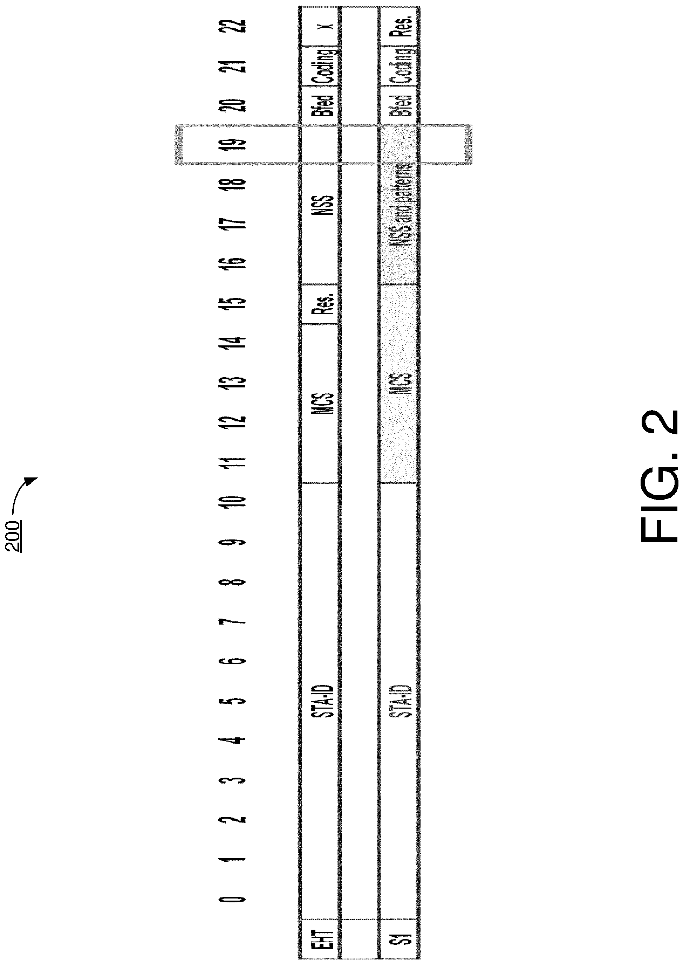

FIG. 1 illustrates an example network environment 100 in which various solutions and schemes in accordance with the present disclosure may be implemented. FIG. 2 ~ FIG. 23 illustrate examples of implementation of various proposed schemes in network environment 100 in accordance with the present disclosure. The following description of various proposed schemes is provided with reference to FIG. 1 ~ FIG. 23.

Referring to FIG. 1, network environment 100 may involve at least a STA 110 communicating wirelessly with a STA 120. Each of STA 110 and STA 120 may be an or otherwise function as an access point (AP) STA or, alternatively, a non-AP STA. STA 110 and STA 120 may be configured or otherwise capable to operate in accordance with the same or different IEEE 802.11 standard(s) (e.g., IEEE 802.11be and future-developed standards). Each of STA 110 and STA 120 may be configured to communicate with each other by utilizing the techniques pertaining to signaling designs for UHR transmissions in wireless communications in accordance with various proposed schemes described below. It is noteworthy that, while the various proposed schemes may be individually or separately described below, in actual implementations some or all of the proposed schemes may be utilized or otherwise implemented jointly. Of course, each of the proposed schemes may be utilized or otherwise implemented individually or separately.

Under various proposed schemes in accordance with the present disclosure, some limitations of UEQM on SS may be assumed in the multiple signaling schemes proposed herein for a User field of non-multi-user multi-input-multiple-output (non-MU-MIMO) transmissions in UHR SIGNAL (UHR-SIG) and beyond. Under a first scheme (Scheme 1), a 4-bit NSS subfield may be reused to jointly indicate <NSS, EQM, UEQM>. The reuse of the NSS subfield may use validate entries for UEQM pattern indication. MCS for equal modulation (EQM) and the first spatial stream of UEQM may be indicated by a 5-bit MCS subfield. Under a second scheme (Scheme 2), 5 bits may be used to jointly indicate <NSS, BFed, Coding, EQM, UEQM>. In a third scheme (Scheme 3), 2-bit tables may be used to indicates UEQM patterns. As transmissions with UEQM may benefit from the finer MCS level, extra MCS signaling may also be considered in the proposed signaling schemes described herein.

With respect to general considerations of UEQM on SS, to limit the combinations of UEQM patterns, the maximum supported SS number may be 4. Since the delta SINR may be as large as 15 dB, the maximum difference in quadrature amplitude modulation (QAM) level between SSs may be 2. Under the above two conditions, the UEQM patterns may be further limited as <2, 3, 3> patterns for <2, 3, 4> number of SS (total 8 patterns). For example, if the number of SS is 4, the number of the UEQM patterns is 3. Moreover, UEQM on SS may require channel condition information, and thus only transmission-beamformed (Tx BF) transmission may be allowed. To reduce implementation complexity, UEQM may only be applied to LDPC-encoded symbols an LDPC coding, and UEQM may be used for non-MU-MIMO transmission (e.g., single-user (SU) and/or orthogonal frequency-division multiple-access (OFDMA) downlink (DL) transmission).

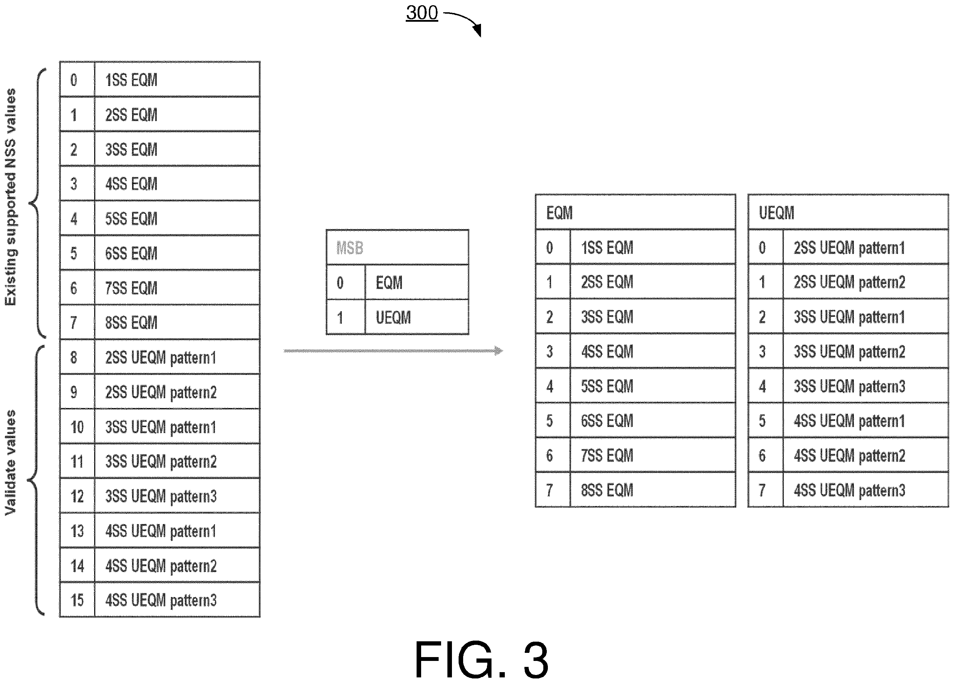

FIG. 2 illustrates an example design 200 and FIG. 3 illustrates an example design 300 for User field for non-MU-MIMO allocation under a proposed scheme (Scheme 1 mentioned above) in accordance with the present disclosure. Referring to FIG. 2, an MCS field (total 5 bits) may be used to indicate all the MCS levels in a UHR transmission and beyond. The MCS field may comprise a 4-bit MCS field and 1 Reserved bit in EHT. Since in IEEE 802.11be, values of NSS more than 8 are Validate bits. Accordingly, those Validate bits may be reused to indicate UEQM patterns. For instance, the 4-bit NSS subfield may be used to jointly indicate <NSS, EQM, UEQM>. In this case, the most significant bit (MSB) in the 4-bit NSS subfield may also be used as an indicator for EQM and UEQM. Under the proposed scheme, extra bits may be added as a Reserved bit (e.g., bit B22). It is noteworthy that, since only beamformed (BFed) and LDPC-encoded symbols are allowed for UEQM transmissions, the bits B20 and B21 may be rephrased for other purposes. For example, bits B20 and B21 may be reused to indicate required feedback information/type in a block acknowledgement (BlockAck) frame to help link adaptation.

Referring to FIG. 3, the NSS subfield validate entries may be reused for indicating the number of SS and corresponding UEQM pattern under the proposed scheme. Moreover, a 4-bit table may also be treated as separated EQM and UEQM tables depending on the respective MSB value. For example, when the MSB value is 0, the remaining 3 bits may indicate the number of SS and the EQM being used; and when the MSB value is 1, the remaining 3 bits may indicate the number of SS and corresponding UEQM pattern. As another example of Scheme1, the table may be arranged by the number of SS. In such cases, the MSB may not be used as the EQM and UEQM indicator.

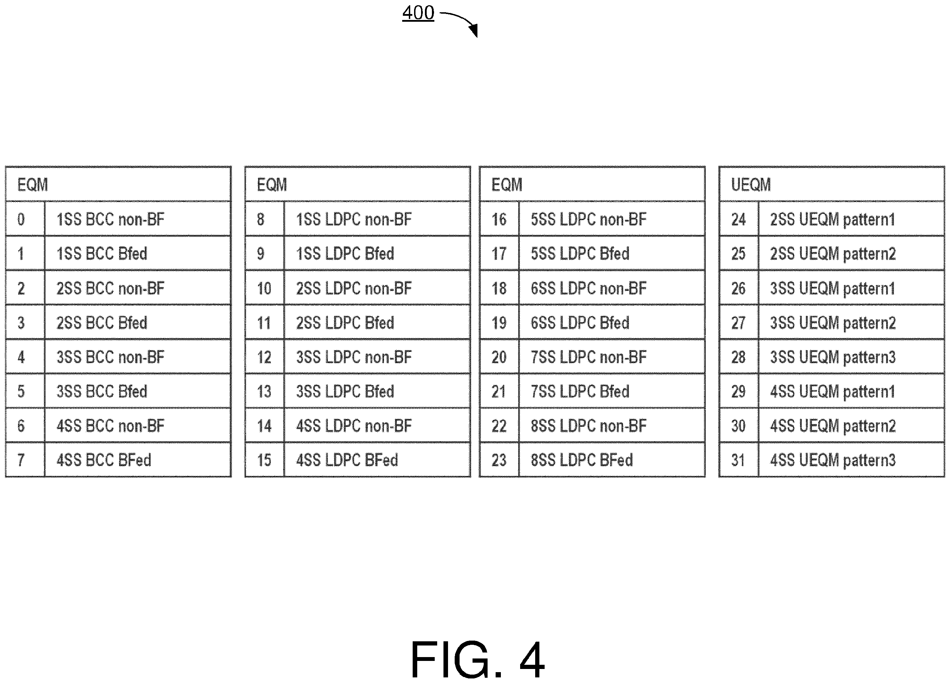

FIG. 4 illustrates an example design 400 under a proposed scheme (Scheme 2 mentioned above) in accordance with the present disclosure. Under the proposed scheme, there may be some limitations in UHR and beyond, such as: (1) supporting up to 4 spatial streams (4SS) using binary convolutional coding (BCC); (2) supporting up to 8 spatial streams (8SS) using LDPC; and (3) supporting 8 patterns for UEQM (using LDPC). The total entry may be 32, thus 5 bits may be sufficient to indicate all of UEQM patterns. Moreover, 5 bits may be used to jointly indicate <NSS, BFed, Coding, EQM, UEQM>, as shown in FIG. 4.

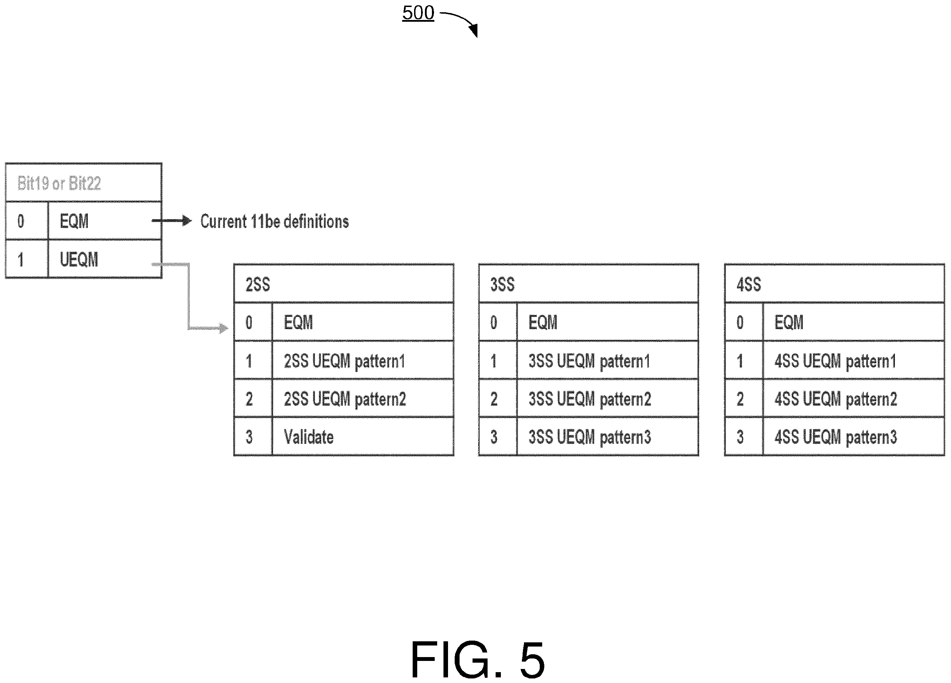

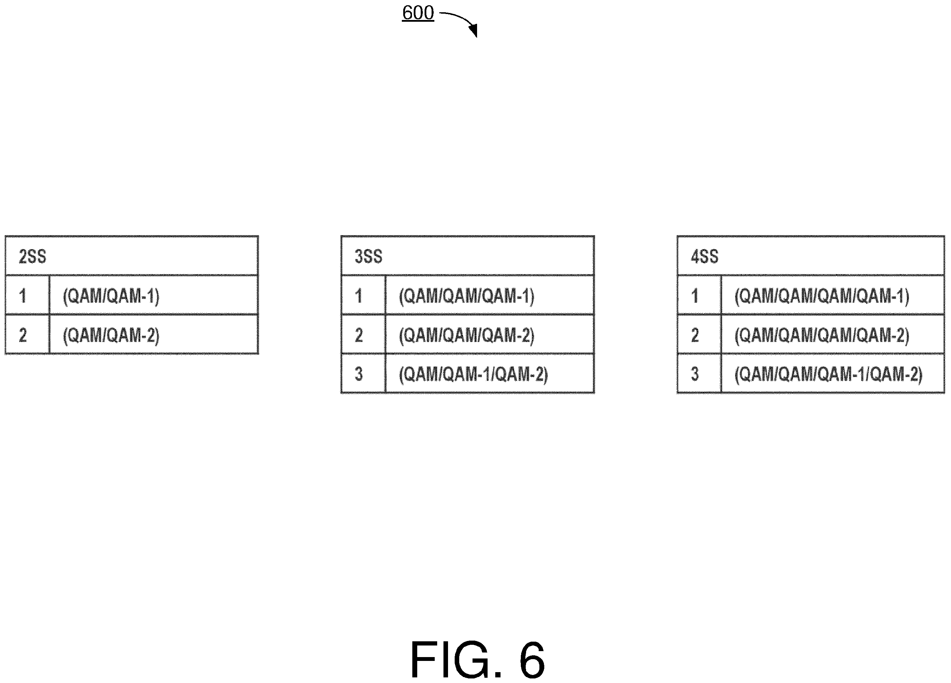

FIG. 5 illustrates an example design 500 and FIG. 6 illustrates an example design 600 under a proposed scheme (Scheme 3 mentioned above) in accordance with the present disclosure. Since UEQM may be only applied in Tx BF with LDPC code, the BFed and Coding bits may be rephrased. The BFed and Coding bits may indicate the 2-bit <EQM, UEQM> tables. For instance, depending on the NSS field, the 2-bit <EQM, UEQM> tables shown in FIG. 5 may be used for UEQM pattern signaling. For example, when the number of SS indicated by the NSS field is 2, the first table may be used. When the number of SS indicated by the NSS field is 3, the second table may be used. When the number of SS indicated by the NSS field is 4, the third table may be used. Under the proposed scheme, a flag bit may be used as an indicator for EQM and UEAM, which may be the MSB in the NSS subfield (e.g., bit B19) or a new added bit B22.

Referring to FIG. 6, under the proposed scheme, the UEQM patterns within different numbers of SS may be ordered by the QAM level difference and starting from the SS which has less change as compared to modulation of EQM, for example, QAM/QAM/QAM/QAM, as shown in FIG. 6. For example, when the number of SS indicated by the NSS field is 2, the first table may be used. When the number of SS indicated by the NSS field is 3, the second table may be used. When the number of SS indicated by the NSS field is 4, the third table may be used. In each table, the order of modulation of a respective SS in each row may follow the level different of QAM in an ascending order (e.g., from small to large). Regarding the table corresponding to 4SS, if the UEQM pattern table applies the first value (e.g., "00"), QAM is applied to the first SS, the second SS and the third SS, and QAM-1 is applied to the fourth SS. Additionally, if the UEQM pattern table applies the second value (e.g., "01"), QAM is applied to the first SS, the second SS and the third SS, and QAM-2 is applied to the fourth SS. Moreover, if the UEQM pattern table applies the third value (e.g., "10", QAM is applied to the first SS and the second SS, QAM-1 is applied to the third SS, and QAM-2 is applied to the fourth SS. Regarding the table corresponding to 2SS, if the UEQM pattern table applies the first value (e.g., "00"), QAM is applied to the first SS, and QAM-1 is applied to the second SS. Additionally, if the UEQM pattern table applies the second value (e.g., "01"), QAM is applied to the first SS, and QAM-2 is applied to the second SS. Regarding the table corresponding to 3SS, if the UEQM pattern table applies the first value (e.g., "00"), QAM is applied to the first SS and the second SS, and QAM-1 is applied to the third SS. Additionally, if the UEQM pattern table applies the second value (e.g., "01"), QAM is applied to the first SS and the second SS, and QAM-2 is applied to the third SS. Moreover, if the UEQM pattern table applies the third value (e.g., "10"), QAM is applied to the first SS, QAM-1 is applied to the second SS, and QAM-2 is applied to the third SS.

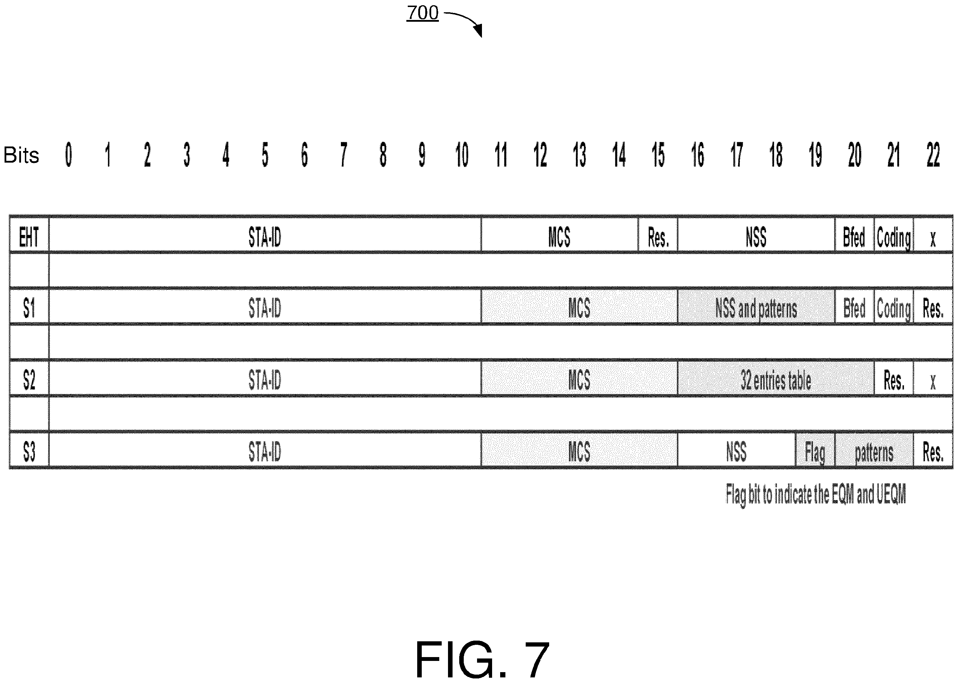

FIG. 7 illustrates an example design 700 under Scheme 1, Scheme 2 and Scheme 3 described above. That is, FIG. 7 shows a summary of the designs under Scheme 1 (denoted as "S1" in FIG. 7), Scheme 2 (denoted as "S2" in FIG. 7) and Scheme 3 (denoted as "S3" in FIG. 7) as described above.

Scheme 1 may involve a joint <Nss, EQM, UEQM> table. The Validate bits in IEEE 802.11be may be reused. BFed and Coding bits may be rephrased for other purposes in case of transmissions with UEQM. Under Scheme 1, one more bit may be added for Reserved bits (total 23 bits).

Scheme 2 may involve a joint <Nss, BFed, Coding, EQM, UEQM> table. The NSS, BFed, Coding bits from IEEE 802.11be may be redefined. There may be no need to extend the number of bits of the User field from IEEE 802.11be, as bit B21 may be used as a Reserved bit (total 22 bits).

Scheme 3 may use a flag bit to indicate EQM and UEQM as well as redefine the BFed and Coding bits for 2-bit tables. One bit in the NSS subfield may be reused. The BFed and Coding bits may be rephrased to 2-bit tables (UEQM patterns depending on the supported number of spatial streams). Under Scheme 3, one more bit may be added for Reserved bits (total 23 bits).

Under the various proposed schemes in accordance with the present disclosure, there may be some general considerations with respect to extra MCS signaling, UEQM on SS signaling, and 2xLDPC coding signaling. It is noteworthy that, although IEEE 802.11be applies a 4-bit MCS table, such may not be sufficient if new MCS levels are added in IEEE 802.11bn. Thus, it would be natural to extend one more bit for MCS indication (e.g., to make it a 5-bit table). Moreover, UEQM on multiple SSs with limited QAM patterns (up to 4SS) may be supported under the proposed schemes. It may be desirable to explicitly indicate: (a) whether UEQM on SS is applied or not; and/or (b) whether 2xLDPC is applied or not. Signaling of these features may be specific for different STAs and therefore they may be indicated in the User Info field in a PPDU.

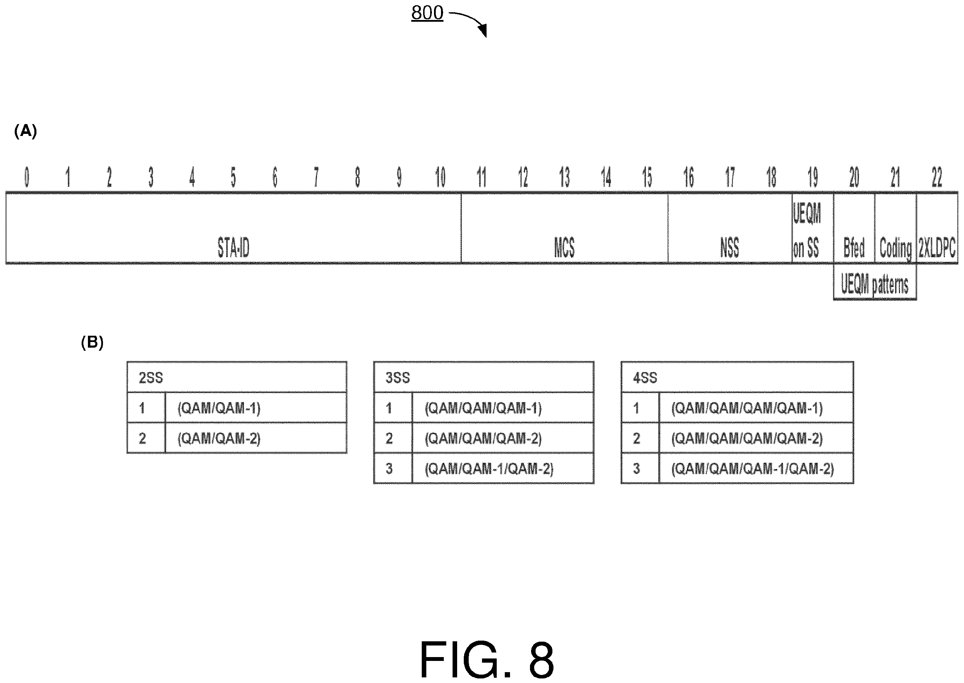

FIG. 8 illustrates an example design 800 under a proposed scheme in accordance with the present disclosure. Design 800 may pertain to a first option (Option 1) of extra MCS signaling, UEQM signaling on SS, 2xLDPC signaling of User field for non-MU-MIMO allocation. Referring to part (A) of FIG. 8, UEQM on different SS may be only applied in Tx BF with LDPC code. UEQM patterns may be indicated as a 2-bit table via rephrasing BFed and Coding bits. On the other hand, in IEEE 802.11 bn, up to 8SS is considered, and thus the MSB of the NSS subfield may be repurposed as a UEQM indicator. Under the proposed scheme, regarding the UEQM on SS bit, a value of "1" may indicate that UEQM on SS is applied, with bits B20-21 redefined as UEQM pattern table(s); and a value of "0" may indicate that EQM is applied. Regarding the 2XLDPC bit, a value of "1" may indicate that transmission coding with LDPC may use a code size of 2x1944 (also referred to be codeword length); and a value of "0" may indicate that transmission coding with LDPC may use a code size other than 2x1944. This 2XLDPC bit may be reserved in an event that the transmission is encoded using BCC. Referring to part (B) of FIG.8, 8 UEQM patterns may be considered. Different table designs may be proposed for different options. The UEQM patterns on SS may be indicated via rephrasing BFed and Coding bits.

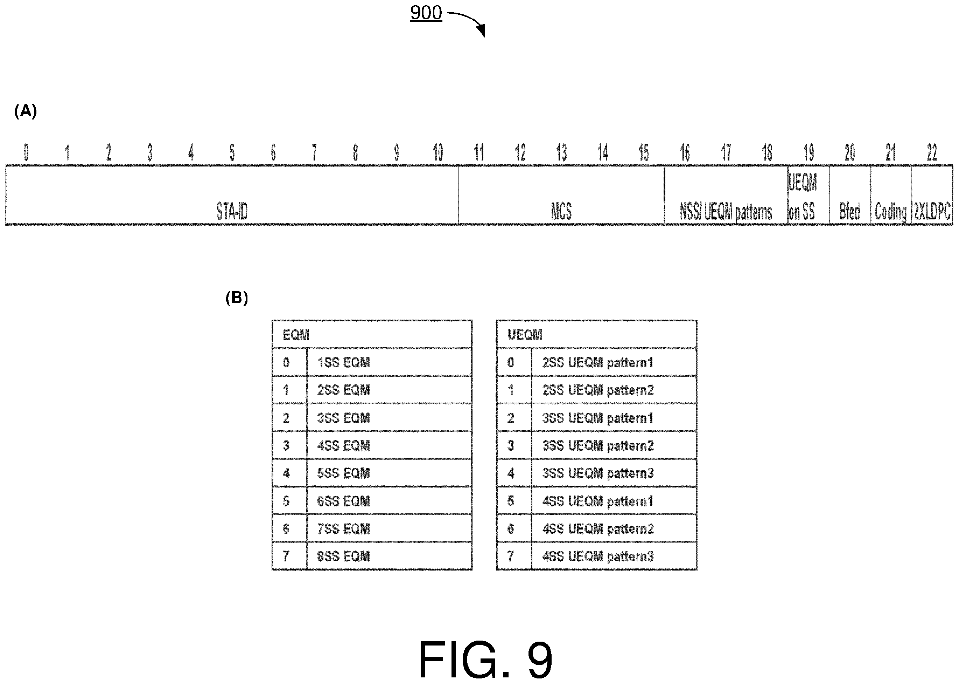

FIG. 9 illustrates an example design 900 under a proposed scheme in accordance with the present disclosure. Design 900 may pertain to a second option (Option 2) of extra MCS signaling, UEQM on SS signaling, 2xLDPC signaling of User field for non-MU-MIMO allocation. In IEEE 802.11be, values of NSS more than 8 are Validate bits. Under the proposed scheme, the MSB of the NSS subfield may be redefined as a UEQM indicator. Referring to part (A) of FIG. 9, the NSS subfield may be rephrased as a UEQM pattern indicator. Regarding the UEQM on SS bit, a value of "1" may indicate that UEQM on SS is applied, with bits B16-18 redefined as a UEQM pattern table; and a value of "0" may indicate that EQM is applied. Regarding the 2XLDPC bit, a value of "1" may indicate that transmission coding with LDPC may use a code size of 2x1944; and a value of "0" may indicate that transmission coding with LDPC may use a code size other than 2x1944. This 2XLDPC bit may be reserved in an event that the transmission is encoded using BCC. Referring to part (B) of FIG. 9, the UEQM on SS patterns may be indicated via rephrasing the NSS subfield.

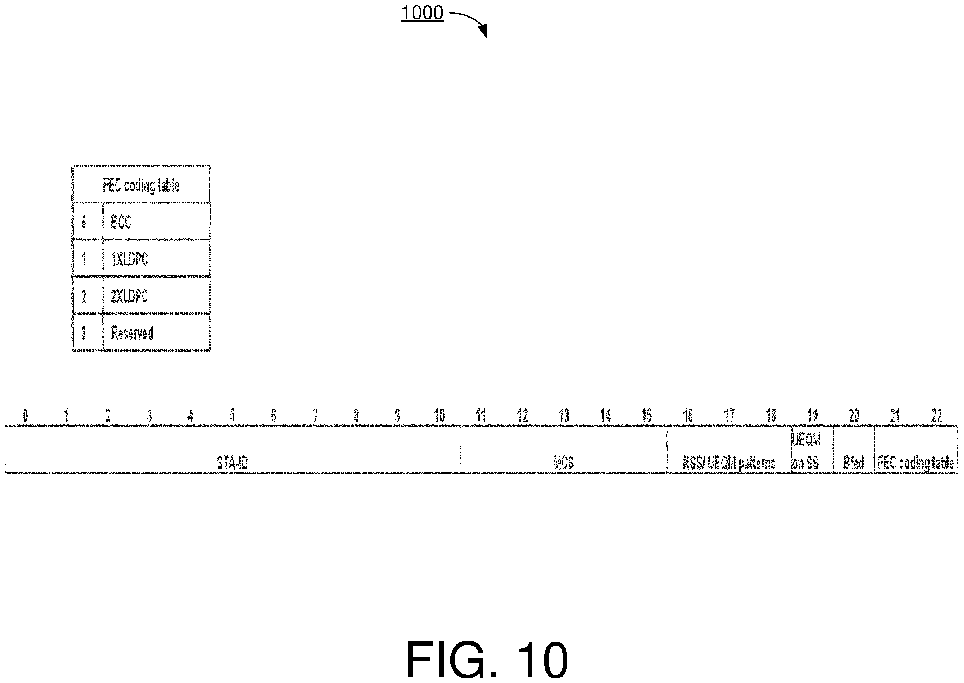

FIG. 10 illustrates an example design 1000 under a proposed scheme in accordance with the present disclosure. Design 1000 may pertain to a third option (Option 3) of extra MCS signaling, UEQM on SS signaling, 2xLDPC signaling of non-MU-MIMO user field. Option 3 may be deemed as a variation of Option 2. Referring to FIG. 10, Coding bit and 2XLDPC bit may be combined as a forward error correction (FEC) coding table. The NSS subfield may be rephrased as a UEQM pattern indicator. Regarding the UEQM on SS bit, a value of "1" may indicate that UEQM on SS is applied, with bits B16-18 redefined as a UEQM pattern table; and a value of "0" may indicate that EQM is applied.

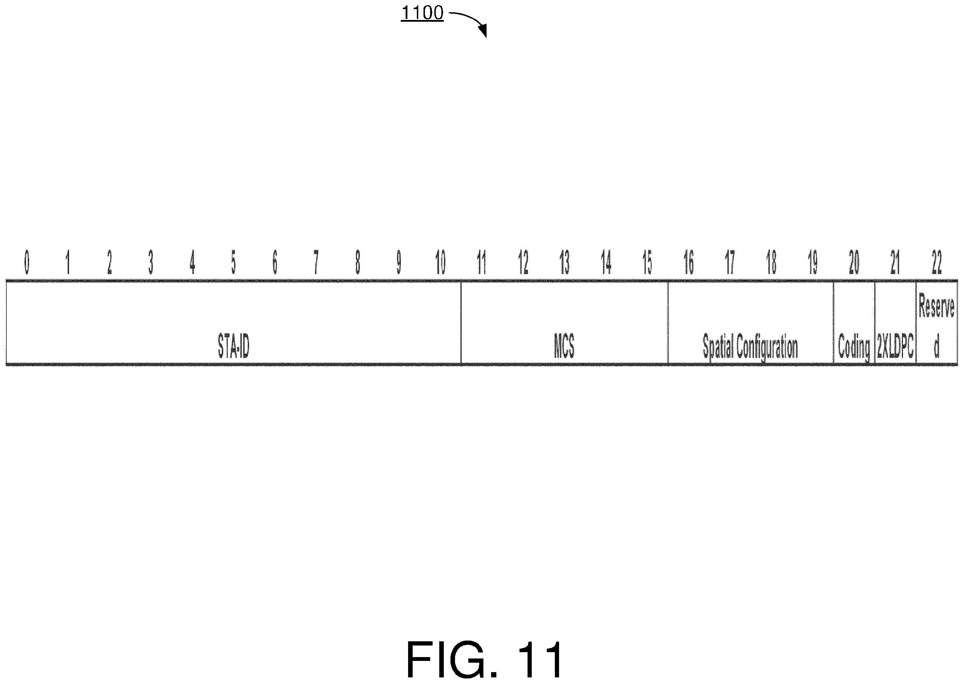

FIG. 11 illustrates an example design 1100 under a proposed scheme in accordance with the present disclosure. Design 1100 may pertain to extra MCS signaling, 2xLDPC signaling of MU-MIMO user field. Since UEQM on SS is not appliable for MU-MIMO scenarios, MU-MIMO signaling design may need to consider only extra MCS and 2XLDPC. Moreover, given that only 8SS is supported in IEEE 802.11bn, the Spatial Configuration subfield may reuse the IEEE 802.11ax 4-bit table (reduced from 6 bits in IEEE802.11be). Referring to FIG. 11, the extra MCS, 2XLDPC indicators may fit in a 22-bit MU-MIMO User field. To match the User field length, one reserved bit may be added. Regarding the 2XLDPC bit, a value of "1" may indicate that transmission coding with LDPC may use a code size of 2x1944; and a value of "0" may indicate that transmission coding with LDPC may use a code size other than 2x1944. This 2XLDPC bit may be reserved in an event that the transmission is encoded using BCC. It is noteworthy that coding bit and 2XLDPC bits may be combined as a 2-bit FEC coding table.

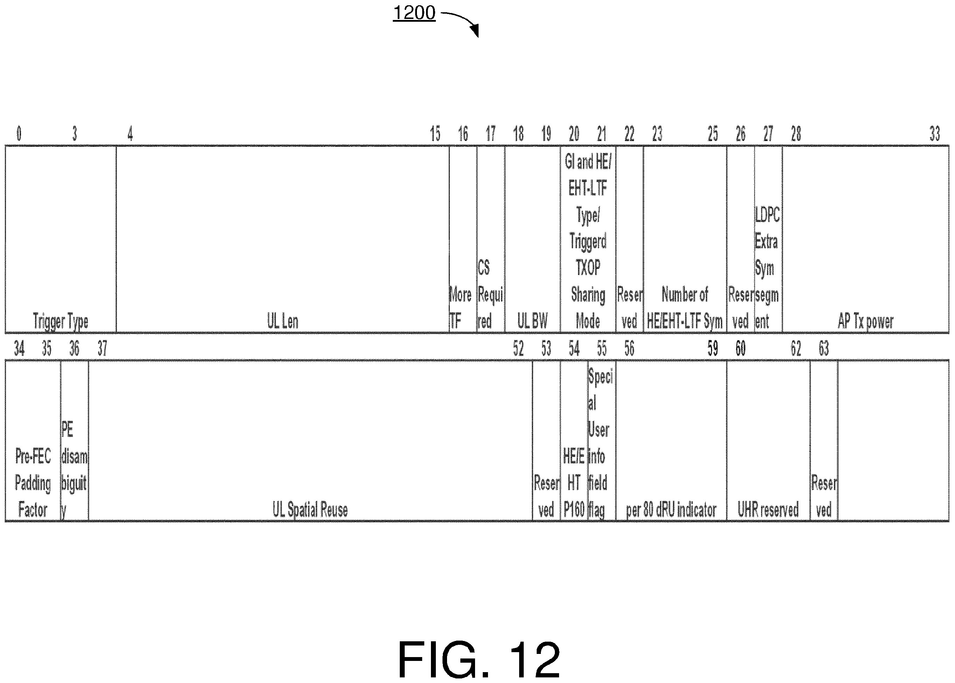

FIG. 12 illustrates an example design 1200 under a proposed scheme in accordance with the present disclosure. Design 1200 may pertain to a first option (Option 1) of DRU signaling in a Common field of a trigger frame. In IEEE 802.11be, bit B56-B62 are Extremely-High-Throughput (EHT) reserved bits. In IEEE 802.11bn, to indicate a DRU (distributed resource unit), 4 bits selected from B56-B62 may be used as a per-80MHz DRU indicator. Each bit in the 4 bits indicates whether the corresponding 80MHz uses a DRU. Under the proposed scheme, unused bits may still be Reserved bits or be used to indicate other UHR features, e.g., aggregate physical-layer protocol data unit (APPDU), dynamic subchannel/subband operation (DSO) and/or in-device coexistence (IDC).

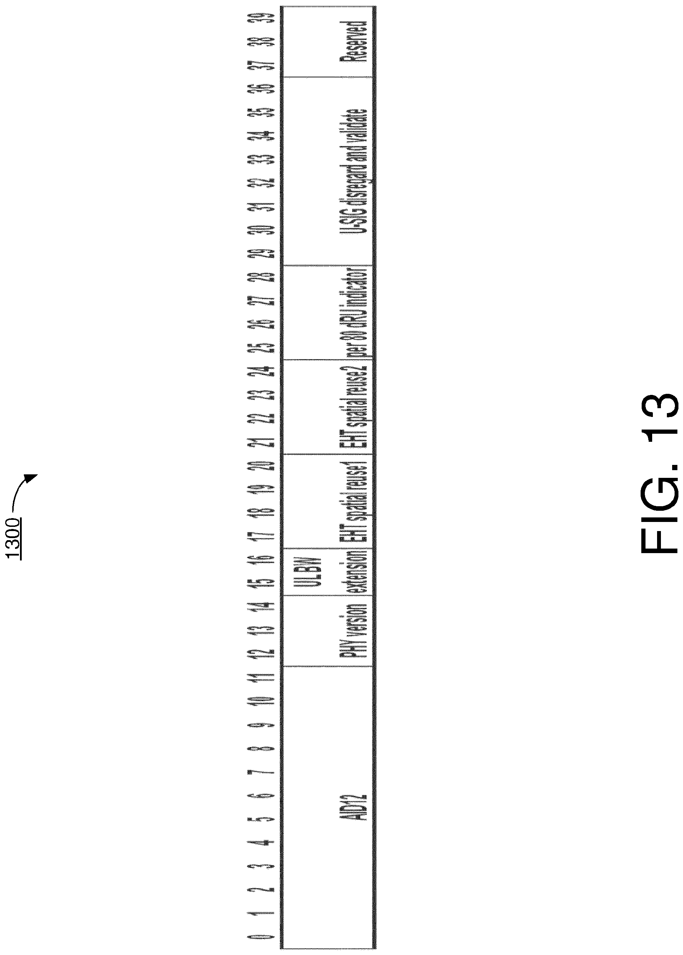

FIG. 13 illustrates an example design 1300 under a proposed scheme in accordance with the present disclosure. Design 1300 may pertain to a second option (Option 2) of DRU signaling in a Special User Info field of a trigger frame. Referring to FIG. 13, the DRU indicator may also be indicated in a Special User Info field. In such cases, 4 bits selected from bits B25-B39 may be used as a per-80MHz DRU indicator. Each bit in the 4 bits indicates whether the corresponding 80MHz uses a DRU. Under the proposed scheme, unused bits may still be Reserved bits, Disregard and Validate bits, or may be used to indicate other UHR features, e.g., APPDU, DSO and/or IDC.

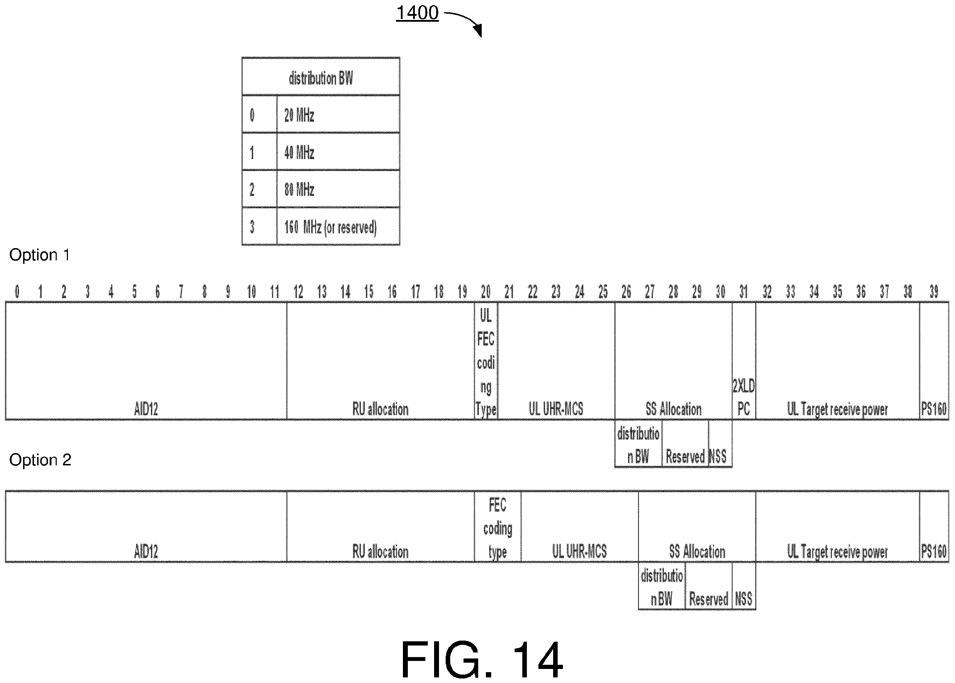

FIG. 14 illustrates an example design 1400 under a proposed scheme in accordance with the present disclosure. Design 1400 may pertain to 2xLDPC signaling and SS Allocation subfield of User field signaling in a trigger frame. In IEEE 802.11be, 4 bits are applied for the starting SS's indication. In IEEE802.11bn, up to 8SS is considered and thus 3 bits are applied for the starting SS's indication. 1 bit in the SS Allocation subfield may be reduced under the proposed scheme. That bit may be applied for 2XLDPC indication. That bit may be the bit 31 in Option 1 in the FIG.14. In case that DRU is indicated, then the SS Allocation subfield may be rephrased for indicating distribution bandwidth used by the user corresponding to the user field and number of SS, as shown in option 1 and option 2 in FIG.14. Under the proposed scheme, the coding bit and 2XLDPC bits may be combined.

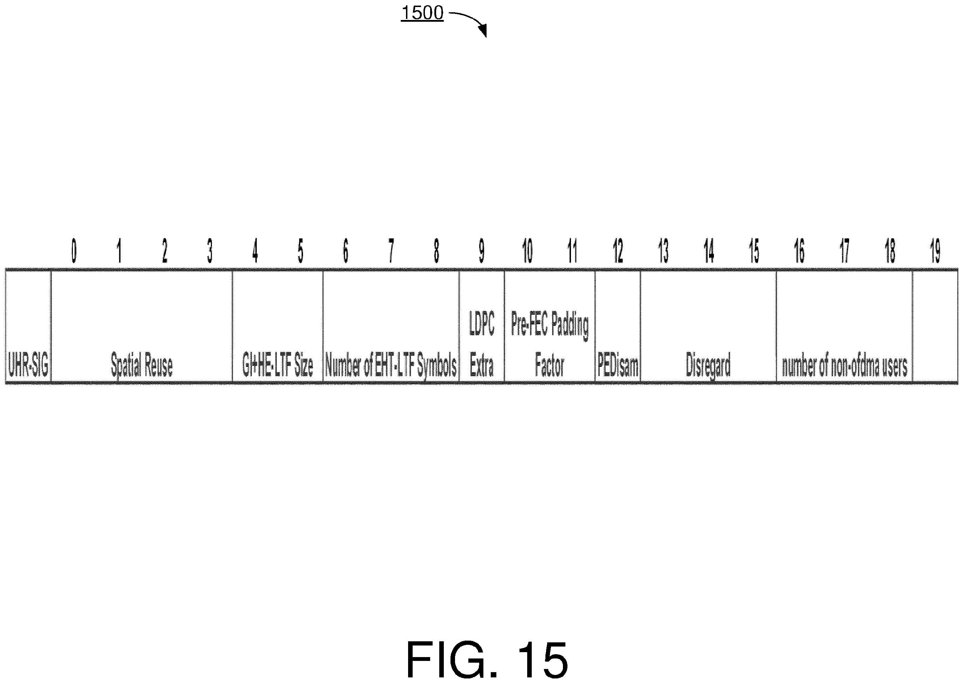

FIG. 15 illustrates an example design 1500 under a proposed scheme in accordance with the present disclosure. Design 1500 may pertain to a UHR-SIG Common field of a PPDU in a non-OFDMA transmission. In IEEE 802.11be, non-MU-MIMO User field is 22 bits in length. In case the User Info field is extended, the UHR-SIG Common field needs to be reduced in length in order to fit in the OFDM symbol boundary (e.g., Common + User Info fields + tail + cyclic redundancy check (CRC) = 52 bits for a SU). For example, if the User Info field is 23 bits, then the length of the UHR-SIG Common field may be reduced by 1 bit. If the User Info field is 24 bits, then the length of the UHR-SIG Common field may be reduced by 2 bits in the Disregard subfield.

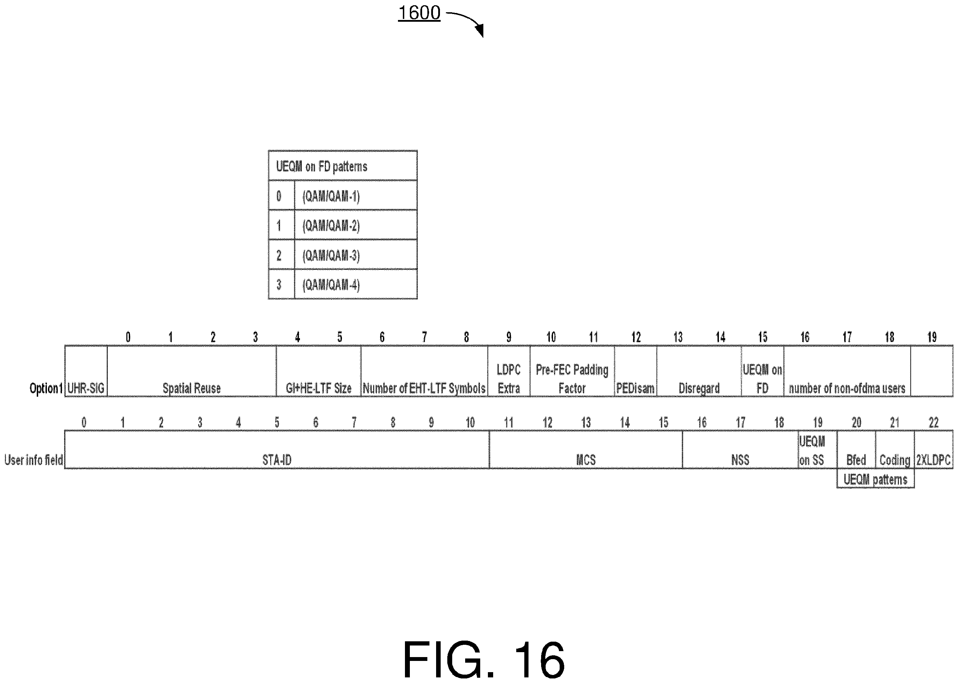

FIG. 16 illustrates an example design 1600 under a proposed scheme in accordance with the present disclosure. Design 1600 may pertain to a first option (Option 1) of UEQM on FD signaling in a UHR-SIG Common field. Under the proposed scheme, the UEQM on FD may be indicated via an additional bit, which may be selected from the Disregard bits (e.g., previous bits B13-B16 in EHT-SIG Common field). The Punctured Channel Info field in the Universal Signaling field (U-SIG) may indicate the resource unit (RU) or multi-RU (MRU) size and location of the applied QAM level. The allowed UEQM operation may not go beyond the allowed RU or MRU pattern. Regarding the UEQM on FD bit, a value of "1" may indicate that UEQM on FD is applied, with bits B20-B21 in the User Info field redefined as a UEQM pattern table (e.g., may be reused or redefined as different UEQM patterns from UEQM patterns on SS) and with B19 set as 0; and a value of "0" may indicate that EQM is applied.

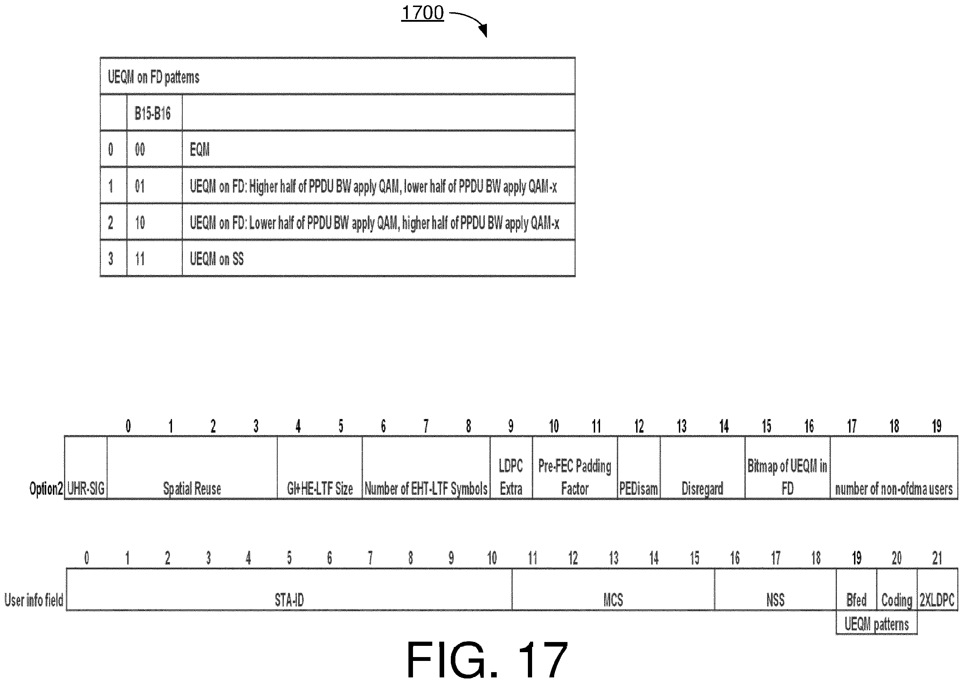

FIG. 17 illustrates an example design 1700 under a proposed scheme in accordance with the present disclosure. Design 1700 may pertain to a second option (Option 2) of UEQM on FD signaling in a UHR-SIG Common field. Under the proposed scheme, 2 bits may be applied to indicate UEQM on SS and FD together. In such cases, UEQM on FD may involve split bandwidths. Under Option 2, 1 bit of 'UEQM on SS' indicator in the non-MU-MIMO User field may be saved. Accordingly, the non-MU-MIMO User field may keep the same length as defined in the IEEE 802.11be specification (e.g., 22 bits).

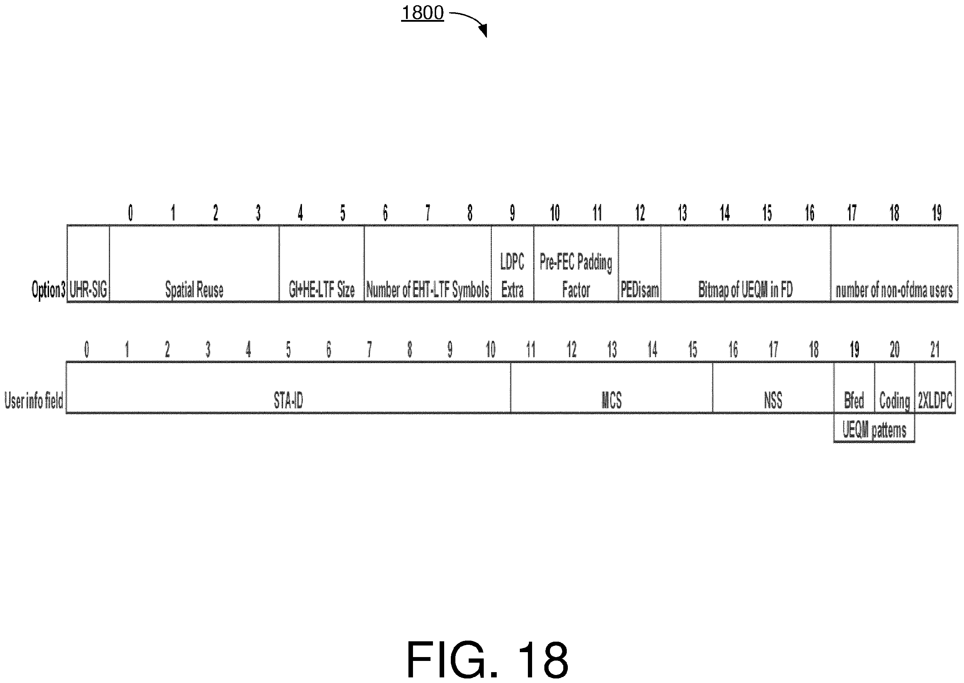

FIG. 18 illustrates an example design 1800 under a proposed scheme in accordance with the present disclosure. Design 1800 may pertain to UEQM on SS and FD signaling of UHR-SIG Common field. Under the proposed scheme, 4 bits of a bitmap may be applied to indicate UEQM on SS and FD together. In such cases, UEQM on FD may split bandwidth by 4. For example, if the bandwidth (BW) of a PPDU is 320MHz, each bit may represent a respective 80MHz. As another example, if the PPDU BW is 160MHz, each bit may represent a respective 40MHz. Representation by the bitmap may start from a lower frequency to a higher frequency. With this proposed scheme and Option 2 described above, 1 bit of the 'UEQM on SS' indicator in the non-MU-MIMO User field may be saved. In such cases, the non-MU-MIMO User field may keep the same length as defined in the IEEE 802.11be specification (e.g., 22bits). Referring to FIG. 18, with respect to the bitmap of UEQM in FD, UEQM on SS may be applied in response to all bits being "1"; EQM may be applied in response to all bits being "0"; and UEQM on FD may be applied in response to not all the bits being "1" or "0". In this case, a bit having a value of "1" may indicate the frequency location for applying QAM, and a bit having a value of "0" may indicate the frequency location for applying the QAM-x level.

Under a proposed scheme in accordance with the present disclosure, separate bits may be applied to indicate 2xLDPC, and there may be no reserved entries for other coding mode (e.g., 4xLDPC or other LDPC coding schemes). Under the proposed scheme, regarding the 2xLDPC bit, a value of "1" may indicate that transmission coding with LDPC may use a code size of 2x1944; and a value of "0" may indicate that transmission coding with LDPC may use a code size other than 2x1944. Alternatively, or additionally, regarding the Coding bit, a value of "0" may indicate that transmission coding uses BCC; and a value of "1" may indicate that transmission coding uses LDPC. Notably, this may be an unusual combination (the Coding bit is set to be 0, and the 2xLDPC bit is set to be 1), which may be used to indicate a new coding mode (e.g., 4xLDPC or other LDPC coding schemes). The same method may be applied in non-MU-MIMO and MU-MIMO User field as well as User Info field in trigger frames.

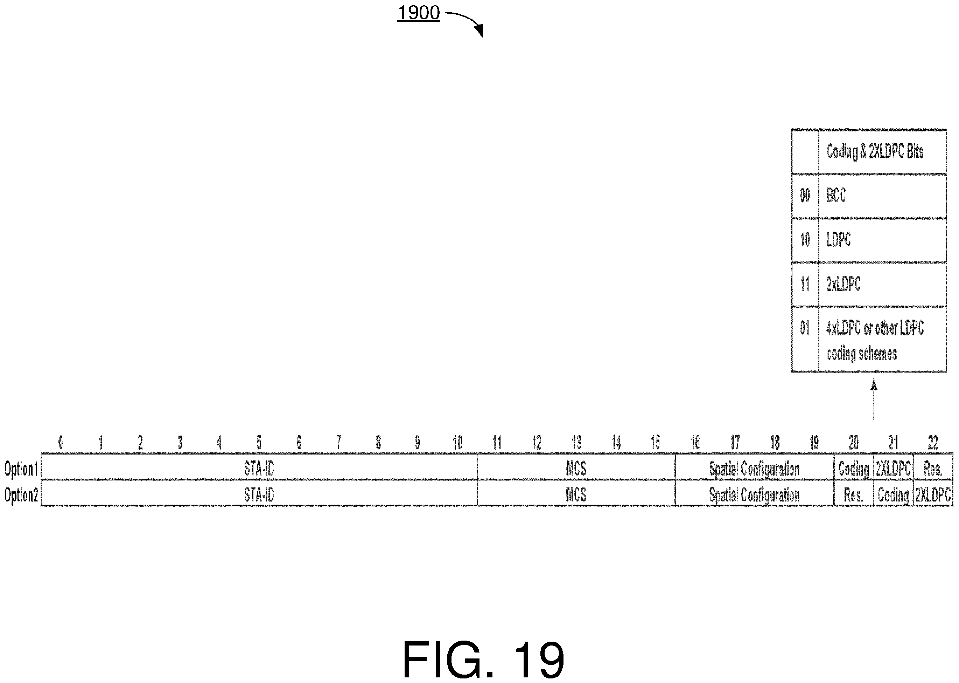

FIG. 19 illustrates an example design 1900 under a proposed scheme in accordance with the present disclosure. Design 1900 may pertain to MU-MIMO User field. Under the proposed scheme, a new coding mode may be indicated via a subfield (e.g., subfield in MU-MIMO User field) by setting the Coding bit to "0" and setting the 2xLDPC bit to "1". It is noteworthy that the location of each subfield may be modified. Under the proposed scheme, the bits in the MU-MIMO User field used as the Coding bit, 2xLDPC bit, and a Reserved bit may differ. Referring to FIG. 19, in a first option, bit B20 may be used as the Coding bit, bit B21 may be used as the 2xLDPC bit, while bit B22 may be a Reserved bit. In a second option, bit B20 may be the Reserved bit, bit B21 may be used as the Coding bit, while bit B22 may be used as the 2xLDPC bit. In the first option, if the Coding bit is set to be 0 and the 2xLDPC bit is set to be 0, a BCC mode is applied; if the Coding bit is set to be 1 and the 2xLDPC bit is set to be 0, an LDPC mode is applied; if the Coding bit is set to be 1 and the 2xLDPC bit is set to be 1, a 2xLDPC mode is applied; if the Coding bit is set to be 0 and the 2xLDPC bit is set to be 1, a 4xLDPC or other LDPC coding modes is applied.

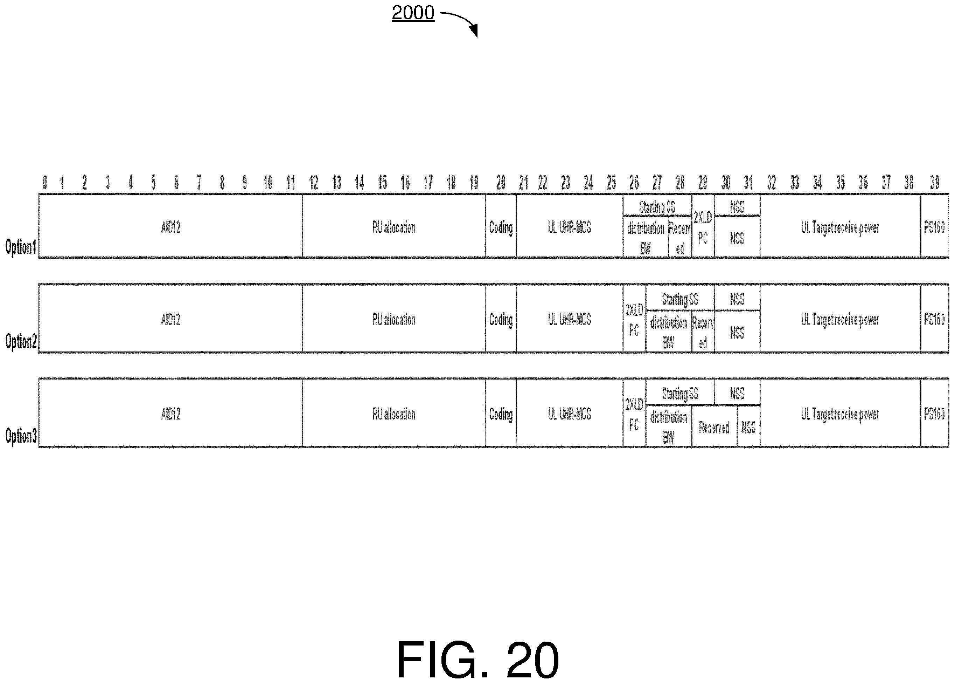

FIG. 20 illustrates an example design 2000 under a proposed scheme in accordance with the present disclosure. Design 2000 may pertain to User field signaling in trigger frames. Under the proposed scheme, the location of each subfield may be modified. Referring to FIG. 20, there may be different options for signaling with different bits among bits B26-B31 of the User field.

In view of the above, some of the features of the various proposed schemes may be summarized below.

Firstly, a 4-bit bitmap (e.g., bits B56-B59) in the Common Info field may be used for DRU indication. For instance, each bit in the 4-bit bitmap may indicate a respective 80MHz of a 320MHz bandwidth being used as DRU or regular resource unit (RRU).

Secondly, other fields, except the Disregard bits in the Common field for non-OFDMA transmission in UHR-SIG, may be kept the same as that in the Common field for non-OFDMA transmission in EHT-SIG. For instance, bits B0-B2 may be used as a Spatial Reuse subfield, bits B4-B5 may be used as a Guard Interval (GI) + Long Training Field (LTF) Size subfield, bits B6-B8 may be used as a Number of UHR-LTF Symbols subfield, bit B9 may be used as an LDPC Extra Symbol Segment subfield, bits B10-B11 may be used as a Pre-FEC Padding Factor subfield, bit B12 may be used as a PE Disambiguity subfield, bits B13-B15 may be used as a Disregard subfield, and bits B16-B18 may be used as a Number of non-OFDMA Users subfield.

Thirdly, signaling design for MU-MIMO User field in the UHR-SIG field may involve 23 bits, including: bits B0-B10 used as a STA identification (STA-ID) subfield, bits B11-B15 used for an MCS subfield, bits B16-B19 used as a Spatial Configuration subfield, bit B20 used as a Resolution subfield, bit B21 used as a Coding subfield, and bit B22 used as a 2xLDPC subfield. In this design, when the Coding subfield indicates LDPC as the mode of encoding, bit B22 for the 2xLDPC subfield may be set to: (a) "1" to indicate transmission coding with LDPC using a code size of 2x1944; or (b) "0" to indicate transmission coding with LDPC using a code size of 648, 1296 or 1944.

Fourthly, signaling design for MU-MIMO User field in the UHR-SIG field may involve 23 bits, including: bits B0-B10 used as a STA-ID subfield, bits B11-B15 used for an MCS subfield, bits B16-B18 used as a Number of Spatial Streams (NSS) subfield, bit B19 used for an UEQM subfield, bits B20-B21 used for an UEQM Patterns subfield (or bit B20 used as a BFed subfield and bit B21 used as a Coding subfield), and bit B22 used as a 2xLDPC subfield. In this design, for UEQM indication, bit B19 may be set to: (a) "1" to indicate that UEQM is applied, with bits B20-B21 redefined to indicate UEQM patterns; or (b) "0" to indicate that EQM is applied (with bits B20 and B21 used for BFed and Coding bits, respectively). Also, when the Coding subfield indicates LDPC, then for 2xLDPC indication, bit B22 may be set to: (a) "1" to indicate transmission coding with LDPC using a code size of 2x1944; or (b) "0" to indicate transmission coding with LDPC using a code size of 648, 1296 or 1944.

Fifthly, a UHR variant User Info field design may be used, including: bits B0-B11 used for an AID12 subfield, bits B12-B19 used as a RU Allocation subfield, bit B20 used for an Uplink (UL) FEC Coding Type subfield, bits B21-B25 used for an UL UHR-MCS subfield, bit B26 used as a 2xLDPC subfield, bits B27-B31 used for an SS Allocation subfield, bits B32-B38 used for an UL Target Receive Power subfield, bit B39 used as a PS160 subfield, and a variable number of bits used as a Trigger Dependent User Info subfield. Moreover, design of the SS Allocation subfield may depend on whether the 80MHz frequency subblock(s) corresponding to user(s) in UHR variant User Info field uses RRU or DRU. That is, 1 bit in the SS Allocation subfield in the UHR variant User Info field may be repurposed to indicate the number of spatial streams (e.g., 1ss or 2ss) in the case of DRU. For instance, in the case of RRU, bits B0-B2 of the SS Allocation subfield may indicate a Starting Stream Index, and bits B3-B4 of the SS Allocation subfield may indicate the Number of Spatial Streams. On the other hand, in the case of DRU, bits B0-B1 of the SS Allocation subfield may indicate a Distribution BW, bits B2-B3 of the SS Allocation subfield may be Reserved bits, and bit B4 may be used for the Number of Spatial Streams.

### Illustrative Implementations

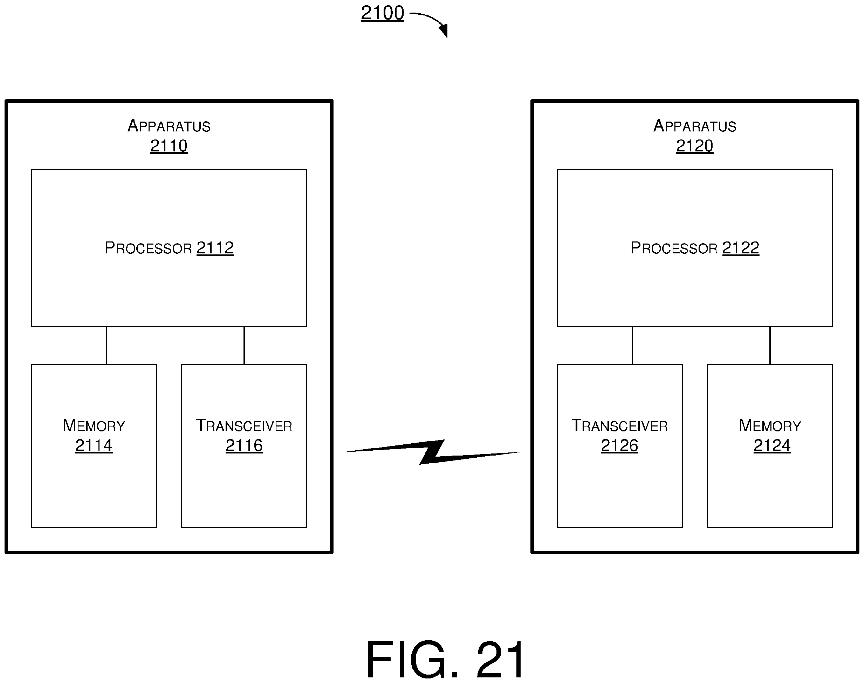

FIG. 21 illustrates an example system 2100 having at least an example apparatus 2110 and an example apparatus 2120 in accordance with an implementation of the present disclosure. Each of apparatus 2110 and apparatus 2120 may perform various functions to implement schemes, techniques, processes and methods described herein pertaining to signaling designs for UHR transmissions in wireless communications, including the various schemes described above with respect to various proposed designs, concepts, schemes, systems and methods described above as well as processes described below. For instance, apparatus 2110 may be implemented in STA 110 and apparatus 2120 may be implemented in STA 120, or vice versa.

Each of apparatus 2110 and apparatus 2120 may be a part of an electronic apparatus, which may be a non-AP STA or an AP STA, such as a portable or mobile apparatus, a wearable apparatus, a wireless communication apparatus or a computing apparatus. When implemented in a STA, each of apparatus 2110 and apparatus 2120 may be implemented in a smartphone, a smart watch, a personal digital assistant, a digital camera, or a computing equipment such as a tablet computer, a laptop computer or a notebook computer. Each of apparatus 2110 and apparatus 2120 may also be a part of a machine type apparatus, which may be an IoT apparatus such as an immobile or a stationary apparatus, a home apparatus, a wire communication apparatus or a computing apparatus. For instance, each of apparatus 2110 and apparatus 2120 may be implemented in a smart thermostat, a smart fridge, a smart door lock, a wireless speaker or a home control center. When implemented in or as a network apparatus, apparatus 2110 and/or apparatus 2120 may be implemented in a network node, such as an AP in a WLAN.

In some implementations, each of apparatus 2110 and apparatus 2120 may be implemented in the form of one or more integrated-circuit (IC) chips such as, for example and without limitation, one or more single-core processors, one or more multicore processors, one or more reduced-instruction set computing (RISC) processors, or one or more complex-instruction-set-computing (CISC) processors. In the various schemes described above, each of apparatus 2110 and apparatus 2120 may be implemented in or as a STA or an AP. Each of apparatus 2110 and apparatus 2120 may include at least some of those components shown in FIG. 21 such as a processor 2112 and a processor 2122, respectively, for example. Each of apparatus 2110 and apparatus 2120 may further include one or more other components not pertinent to the proposed scheme of the present disclosure (e.g., internal power supply, display device and/or user interface device), and, thus, such component(s) of apparatus 2110 and apparatus 2120 are neither shown in FIG. 21 nor described below in the interest of simplicity and brevity.

In one aspect, each of processor 2112 and processor 2122 may be implemented in the form of one or more single-core processors, one or more multicore processors, one or more RISC processors or one or more CISC processors. That is, even though a singular term "a processor" is used herein to refer to processor 2112 and processor 2122, each of processor 2112 and processor 2122 may include multiple processors in some implementations and a single processor in other implementations in accordance with the present disclosure. In another aspect, each of processor 2112 and processor 2122 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 2112 and processor 2122 is a special-purpose machine specifically designed, arranged and configured to perform specific tasks including those pertaining to signaling designs for UHR transmissions in wireless communications in accordance with various implementations of the present disclosure.

In some implementations, apparatus 2110 may also include a transceiver 2116 coupled to processor 2112. Transceiver 2116 may include a transmitter capable of wirelessly transmitting and a receiver capable of wirelessly receiving data. In some implementations, apparatus 2120 may also include a transceiver 2126 coupled to processor 2122. Transceiver 2126 may include a transmitter capable of wirelessly transmitting and a receiver capable of wirelessly receiving data. It is noteworthy that, although transceiver 2116 and transceiver 2126 are illustrated as being external to and separate from processor 2112 and processor 2122, respectively, in some implementations, transceiver 2116 may be an integral part of processor 2112 as a system on chip (SoC), and transceiver 2126 may be an integral part of processor 2122 as a SoC.

In some implementations, apparatus 2110 may further include a memory 2114 coupled to processor 2112 and capable of being accessed by processor 2112 and storing data therein. In some implementations, apparatus 2120 may further include a memory 2124 coupled to processor 2122 and capable of being accessed by processor 2122 and storing data therein. Each of memory 2114 and memory 2124 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 2114 and memory 2124 may include a type of read-only memory (ROM) such as mask ROM, programmable ROM (PROM), erasable programmable ROM (EPROM) and/or electrically erasable programmable ROM (EEPROM). Alternatively, or additionally, each of memory 2114 and memory 2124 may include a type of non-volatile random-access memory (NVRAM) such as flash memory, solid-state memory, ferroelectric RAM (FeRAM), magnetoresistive RAM (MRAM) and/or phase-change memory.

Each of apparatus 2110 and apparatus 2120 may be a communication entity capable of communicating with each other using various proposed schemes in accordance with the present disclosure. For illustrative purposes and without limitation, a description of capabilities of apparatus 2110, as STA 110, and apparatus 2120, as STA 120, is provided below in the context of example processes 2200 and 2300. It is noteworthy that, although a detailed description of capabilities, functionalities and/or technical features of either of apparatus 2110 and apparatus 2120 is provided below, the same may be applied to the other of apparatus 2110 and apparatus 2120 although a detailed description thereof is not provided solely in the interest of brevity. It is also noteworthy that, although the example implementations described below are provided in the context of WLAN, the same may be implemented in other types of networks.

### Illustrative Processes

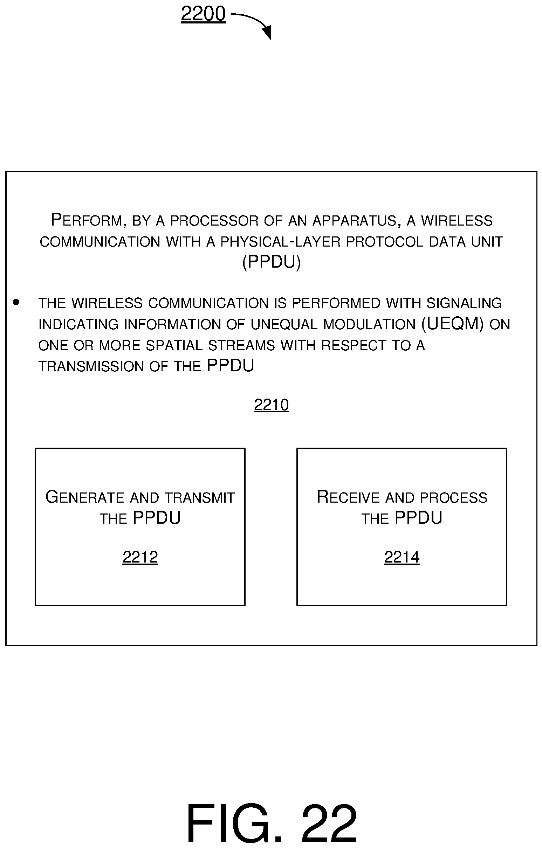

FIG. 22 illustrates an example process 2200 in accordance with an implementation of the present disclosure. Process 2200 may represent an aspect of implementing various proposed designs, concepts, schemes, systems and methods described above. More specifically, process 2200 may represent an aspect of the proposed concepts and schemes pertaining to signaling designs for UHR transmissions in wireless communications in accordance with the present disclosure. Process 2200 may include one or more operations, actions, or functions as illustrated by one or more of blocks 2210 as well as sub-blocks 2212 and 2214. Although illustrated as discrete blocks, various blocks of process 2200 may be divided into additional blocks, combined into fewer blocks, or eliminated, depending on the desired implementation. Moreover, the blocks/sub-blocks of process 2200 may be executed in the order shown in FIG. 22 or, alternatively, in a different order. Furthermore, one or more of the blocks/sub-blocks of process 2200 may be executed repeatedly or iteratively. Process 2200 may be implemented by or in apparatus 2110 and apparatus 2120 as well as any variations thereof. Solely for illustrative purposes and without limiting the scope, process 2200 is described below in the context of apparatus 2110 implemented in or as STA 110 functioning as a non-AP STA and apparatus 2120 implemented in or as STA 120 functioning as an AP STA of a wireless network such as a WLAN in network environment 100 in accordance with one or more of IEEE 802.11 standards. Process 2200 may begin at block 2210.

At 2210, process 2200 may involve processor 2112 of apparatus 2110 performing, via transceiver 2116, a wireless communication (e.g., with apparatus 2120) with a PPDU. The wireless communication may be performed with signaling indicating information of UEQM on one or more spatial streams with respect to a transmission of the PPDU. The performing of the wireless communication may be represented by 2212 and/or 2214.

At 2212, process 2200 may involve processor 2112 generating and transmitting the PPDU.

At 2214, process 2200 may involve processor 2112 receiving and processing the PPDU.

In some implementations, a bit 19 (B19) of a User field for a non-MU-MIMO allocation in an UHR-SIG field of the PPDU may indicate whether UEQM or EQM is applied in the PPDU.

In some implementations, responsive to the B19 indicating that the UEQM is applied, bits 20 and 21 (B20-B21) of the User field for the non-MU-MIMO allocation may indicate UEQM patterns. Moreover, the UEQM patterns may be indicated depending on a corresponding number of spatial streams indicated in an NSS field in the User field for non-MU-MIMO allocation.

In some implementations, a number of bits for the User field for the non-MU-MIMO allocation in the UHR-SIG field in the PPDU may be 23. In some implementations, bits 11-15 (B11-B15) used to indicates MCS and bits 16-18 (B16-B18) may be used as an NSS field, which are set to be a number of spatial streams for the transmission of the PPDU minus 1, in the User field for the non-MU-MIMO allocation in the UHR-SIG field in the PPDU. In some implementations, bit 22 (B22) in the User field for the non-MU-MIMO allocation in the UHR-SIG field may be used to indicate whether LDPC codeword length is 2x1944. For instance, when the bit B22 is set to 1, it may indicate the LDPC codeword length for the PPDU is 2x1944. Moreover, when the bit B22 is set to 0, it may indicate the LDPC codeword length is less and other than 2x1944. In some implementations, bit 21 (B21) set to 0 and bit 22 (B22) set to 1 in the User field for the non-MU-MIMO allocation in the UHR-SIG field may indicate a new coding mode other than a BCC mode and an LDPC mode with codeword length less or equal to 2x1944 is used for the PPDU.

In some implementations, a Common field for non-OFDMA in a UHR-SIG field of the PPDU may be 19 bits.

In some implementations, a number of bits for a User field for a MU-MIMO allocation in a UHR-SIG field in the PPDU may be 23. In some implementations, bits 11-15 (B11-B15) may be used to indicates MCS, and bits 16-19 (B16-B19) may be used to indicates Spatial Stream Configuration in the User field for the MU-MIMO allocation in the UHR-SIG field. In some implementations, a bit in the User field for the MU-MIMO allocation in the UHR-SIG field may be used to indicate whether LDPC codeword length for the PPDU is 2x1944. For instance, when the bit is set to 1, it may indicate the LDPC codeword length is 2x1944. Moreover, when the bit is set to 0, it may indicate the LDPC codeword length is less and other than 2x1944. In some implementations, the bit may be bit B22 in the User field for the MU-MIMO allocation in the UHR-SIG field.

In some implementations, bit 21 (B21) set to 0 and bit 22 (B22) set to 1 in the User field for the MU-MIMO allocation in the UHR-SIG field in the PPDU may indicate a new coding mode other than a BCC mode and an LDPC mode with codeword length less or equal to 2x1944 is used for the PPDU.

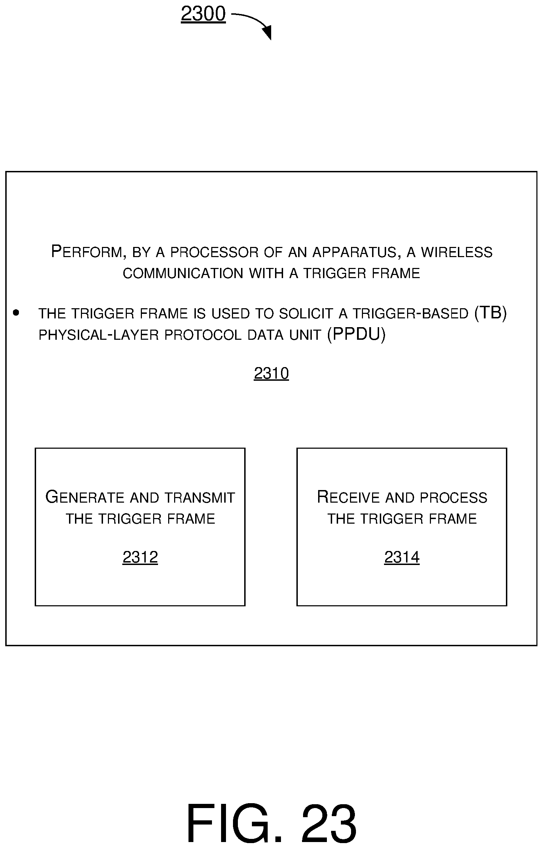

FIG. 23 illustrates an example process 2300 in accordance with an implementation of the present disclosure. Process 2300 may represent an aspect of implementing various proposed designs, concepts, schemes, systems and methods described above. More specifically, process 2300 may represent an aspect of the proposed concepts and schemes pertaining to signaling designs for UHR transmissions in wireless communications in accordance with the present disclosure. Process 2300 may include one or more operations, actions, or functions as illustrated by one or more of blocks 2310 as well as sub-blocks 2312 and 2314. Although illustrated as discrete blocks, various blocks of process 2300 may be divided into additional blocks, combined into fewer blocks, or eliminated, depending on the desired implementation. Moreover, the blocks/sub-blocks of process 2300 may be executed in the order shown in FIG. 23 or, alternatively, in a different order. Furthermore, one or more of the blocks/sub-blocks of process 2300 may be executed repeatedly or iteratively. Process 2300 may be implemented by or in apparatus 2110 and apparatus 2120 as well as any variations thereof. Solely for illustrative purposes and without limiting the scope, process 2300 is described below in the context of apparatus 2110 implemented in or as STA 110 functioning as a non-AP STA and apparatus 2120 implemented in or as STA 120 functioning as an AP STA of a wireless network such as a WLAN in network environment 100 in accordance with one or more of IEEE 802.11 standards. Process 2300 may begin at block 2310.

At 2310, process 2300 may involve processor 2112 of apparatus 2110 performing, via transceiver 2116, a wireless communication (e.g., with apparatus 2120) with a trigger frame. The trigger frame may be used to solicit a trigger-based (TB) PPDU. The performing of the wireless communication may be represented by 2312 and/or 2314.

At 2312, process 2200 may involve processor 2112 generating and transmitting the trigger frame.

At 2314, process 2200 may involve processor 2112 receiving and processing the trigger frame.

In some implementations, a bit 19 (B19) of a User field for a non-MU-MIMO allocation in an UHR-SIG field of the PPDU may indicate whether UEQM or EQM is applied in the PPDU.

In some implementations, bits 56-59 (B56-B59) in a UHR Common Info field of the trigger frame may be used for a distributed-tone resource unit (DRU) and a regular resource unit (RRU) indication. Moreover, each bit may indicate a respective 80MHz frequency subblock being solicited for the DRU or RRU.

In some implementations, bits 27-31 (B27-31) in a UHR User Info field in the trigger frame are used as a SS Allocation field.

In some implementations, responsive to the B56-59 indicating that RRU being used in the corresponding 80MHz frequency subblock(s) of the TB-PPDU, first three bits of the bits 27-31 (B27-31) in a UHR User Info field in the trigger frame indicate a starting spatial stream index and remaining two bits of the bits 27-31 (B27-31) indicate a number of spatial streams.

In some implementations, responsive to the B56-59 indicating that DRU being used in the corresponding 80MHz frequency subblock(s) of the TB-PPDU, first two bits of bits 27-31 (B27-31) in a UHR User Info field in the trigger frame may indicate a distribution bandwidth, the next two bits of the bits 27-31 (B27-31) may be reserved bits, and a remaining one bit of the bits 27-31 (B27-31) may indicate a number of spatial streams.

In some implementations, 1 bit in a UHR User Info field in the trigger frame may be used to indicates whether LDPC codeword length is 2x1944 for the TB PPDU. For instance, when the bit is set to 1, it may indicate the LDPC codeword length is 2x1944. Moreover, when the bit is set to 0, it may indicate the LDPC codeword length is less and other than 2x1944. In some implementations, this bit may be bit B26 in the UHR User Info field in the trigger frame.

In some implementations, bit 20 (B20) set to 0 and bit 26 (B26) set to 1 in the UHR User Info field in the trigger frame may indicate a new coding mode other than a BCC mode and an LDPC mode with codeword length less or equal to 2x1944 is used for the TB_PPDU**.**

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope and spirit of the present disclosure. Accordingly, the various implementations disclosed herein are not intended to be limiting, with the true scope and spirit being indicated by the following claims.

## Claims

1. A wireless communication method, comprising:
performing, by a processor of an apparatus, a wireless communication with a physical-layer protocol data unit (PPDU) by either:
generating and transmitting the PPDU; or
receiving and processing the PPDU.

2. The method of Claim 1, wherein a bit 19 (B19) of a User field for a non-multi-user multiple-input-multiple-output (non-MU-MIMO) allocation in an Ultra-High-Reliability SIGNAL (UHR-SIG) field of the PPDU indicates whether unequal modulation (UEQM) or equal modulation (EQM) is applied in the PPDU.

3. The method of Claim 2, wherein, responsive to the B19 indicating that the UEQM is applied, bits 20 and 21 (B20-B21) of the User field for the non-MU-MIMO allocation indicate UEQM patterns, and the UEQM patterns are indicated depending on a corresponding number of spatial streams indicated in a NSS field in the User field for non-MU-MIMO allocation.

4. The method of Claim 1, wherein bits 11-15 (B11-B15) used to indicates MCS and bits 16-18 (B16-B18) are used as an NSS field, which are set to be a number of spatial streams for the transmission of the PPDU minus 1, in a User field for a non-MU-MIMO allocation in an UHR-SIG field in the PPDU.

5. The method of Claim 1, wherein bit 22 (B22) in a User field for a non-MU-MIMO allocation in a UHR-SIG field is used to indicate whether LDPC codeword length for the PPDU is 2x1944, wherein, when the bit B22 is set to 1, it indicates the LDPC codeword length is 2x1944, and wherein, when the bit B22 is set to 0, it indicates the LDPC codeword length is less and other than 2x1944.

6. The method of Claim 1, wherein bit 21 (B21) set to 0 and bit 22 (B22) set to 1 in a User field for a non-MU-MIMO allocation in a UHR-SIG field indicates a new coding mode other than a BCC mode and an LDPC mode with codeword length less or equal to 2x1944 is used for the PPDU.

7. The method of Claim 1, wherein bits 11-15 (B11-B15) are used to indicates MCS and bits 16-19 (B16-B19) used to indicates Spatial Stream Configuration in a User field for a MU-MIMO allocation in a UHR-SIG field of the PPDU.

8. The method of Claim 1, wherein a bit in a User field for a MU-MIMO allocation in a UHR-SIG field is used to indicate whether LDPC codeword length for the PPDU is 2x1944, wherein, when the bit is set to 1, it indicates the LDPC codeword length is 2x1944, and wherein, when the bit is set to 0, it indicates the LDPC codeword length is less and other than 2x1944.

9. The method of Claim 1, wherein bit 21 (B21) set to 0 and bit 22 (B22) set to 1 in a User field for a MU-MIMO allocation in a UHR-SIG field in the PPDU indicates a new coding mode other than a BCC mode and an LDPC mode with codeword length less or equal to 2x1944 is used for the PPDU.

10. A wireless communication method, comprising:
performing, by a processor of an apparatus, a wireless communication with a trigger frame by either:
generating and transmitting the trigger frame; or
receiving and processing the trigger frame.
wherein the trigger frame is used to solicit a trigger-based (TB) PPDU.

11. The method of Claim 10, wherein bits 56-59 (B56-B59) in a UHR Common Info field of the trigger frame are used as 4-bit bitmap, with each bit of the 4-bit bitmap indicating a respective 80MHz frequency subblock being used as a distributed-tone resource unit (DRU) or a regular resource unit (RRU).

12. The method of Claim 10, wherein, responsive to the B56-59 indicating that RRU being used in the corresponding one or more 80MHz frequency subblocks of the TB-PPDU, first three bits of the bits 27-31 (B27-31) in a UHR User Info field in the trigger frame indicate a starting spatial stream index and remaining two bits of the bits 27-31 (B27-31) indicate a number of spatial streams.

13. The method of Claim 10, wherein, responsive to the B56-59 indicating that DRU being used in the corresponding one or more 80MHz frequency subblocks of the TB-PPDU, first two bits of bits 27-31 (B27-31) in a UHR User Info field in the trigger frame indicate a distribution bandwidth, next two bits of the bits 27-31 (B27-31) are reserved bits and remaining one bit of the bits 27-31 (B27-31) indicates a number of spatial streams.

14. The method of Claim 10, wherein a bit in a UHR User Info field in the trigger frame is used to indicates whether LDPC codeword length is 2x1944 for the TB PPDU, wherein when the bit is set to 1, it indicates the LDPC codeword length is 2x1944, and when the bit is set to 0, it indicates the LDPC codeword length is less and other than 2x1944.

15. The method of Claim 10, wherein bit 20 (B20) set to 0 and bit 26 (B26) set to 1 in the UHR User Info field in the trigger frame indicates a new coding mode other than a BCC mode and an LDPC mode with codeword length less or equal to 2x1944 is used for the TB PPDU.
